# EUROPEAN PATENT APPLICATION

(11) **EP 4 836 095 A1**
(43) Date of publication of application: **04.11.2026**
(21) Application number: 24910487.8
(22) Date of filing: 27.11.2024
(51) Int. Cl.: H01M 10/6568

(54) **HEAT EXCHANGE PLATE, AND BATTERY ASSEMBLY AND VEHICLE HAVING SAME**

(30) Priority: 29.12.2023 CN 202311864737
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: ZHAO, Qun, Hangzhou, Zhejiang 310051 (CN); CHEN, Boyan, Hangzhou, Zhejiang 310051 (CN); ZHOU, Wei, Hangzhou, Zhejiang 310051 (CN); ZHANG, Dewang, Hangzhou, Zhejiang 310051 (CN); GUO, Mengmeng, Hangzhou, Zhejiang 310051 (CN)
(74) Representative: Range, Christopher William
(86) International application number: PCT/CN2024/134860
(87) International publication number: WO 2025/139554

(57) **Abstract**

Provided are a heat exchange plate (100), a battery assembly and a vehicle including same. The heat exchange plate (100) includes a heat exchange plate body (100) having a heat exchange surface (11). A cooling flow channel (13), and a water inlet (14) and a water outlet (15) that are in communication with the cooling flow channel (13) are formed in the heat exchange plate body (10). The cooling flow channel (13) includes a water inlet flow passage (131) in communication with the water inlet (14), a water outlet flow passage (132) in communication with the water outlet (15), and a plurality of branch flow passages (133). The water inlet flow passage (131) and/or the water outlet flow passage (132) is formed at an edge of the heat exchange plate body (10). Each branch flow passage (133) is connected to the water inlet flow passage (131) and the water outlet flow passage (132) and directly faces the heat exchange surface (11) to exchange heat with a battery pack.

## Description

### CROSS-REFERENCE TO RELATED APPLICATION

This application is based on and claims priority to Chinese Patent Application No. 202311864737.3, filed on December 29, 2023, the entire contents of which are incorporated herein by reference.

### FIELD

The present disclosure relates to, but is not limited to, the field of heat exchange plate technologies, and more specifically, to a heat exchange plate, and a battery assembly and a vehicle including same.

### BACKGROUND

In the related art, a battery pack is typically used in conjunction with structures such as a heat exchange plate during operation. The heat exchange plate can perform heat exchange with the battery pack to maintain the battery pack at an optimal temperature during operation, enhancing performance of the battery pack. The heat exchange plate is internally provided with a plurality of heat exchange regions. Each of the plurality of heat exchange regions can independently perform heat exchange with a battery group in the battery pack. However, an arrangement of flow channels inside the heat exchange plate affects a heat exchange efficiency of the heat exchange plate.

### SUMMARY

The following is an overview of a subject matter described in detail herein. This overview is not intended to limit the scope of protection of the claims as appended.

An objective of the present disclosure is to provide a heat exchange plate. The heat exchange plate exhibits a high heat exchange efficiency when performing heat exchange with a battery pack.

Another objective of the present disclosure is to provide a battery assembly.

Yet another objective of the present disclosure is to provide a vehicle.

A heat exchange plate according to an embodiment of the present disclosure includes a heat exchange plate body having a heat exchange surface adapted to directly face a battery pack. A cooling flow channel, a water inlet, and a water outlet are formed in the heat exchange plate body. The water inlet and the water outlet are in communication with the cooling flow channel. The cooling flow channel includes: a water inlet flow passage in communication with the water inlet and a water outlet flow passage in communication with the water outlet, the water inlet flow passage and/or the water outlet flow passage being formed at an edge of the heat exchange plate body; and a plurality of branch flow passages configured to be parallel to each other and arranged at intervals. Each of the plurality of branch flow passages is connected to both the water inlet flow passage and the water outlet flow passage and directly faces the heat exchange surface to be adapted for heat exchange with the battery pack.

For the heat exchange plate according to the embodiment of the present disclosure, the heat exchange plate performs heat exchange with the battery pack through the heat exchange surface. Further, the plurality of branch flow passages of the cooling flow channel are arranged to directly face the heat exchange surface, improving a heat exchange efficiency. In addition, forming the water inlet flow passage and/or the water outlet flow passage at the edge of the heat exchange plate body ensures that inflow and outflow of a cooling liquid do not affect heat exchange between the heat exchange surface and the battery pack.

A battery assembly according to an embodiment of the present disclosure includes: a plurality of battery packs configured to be arranged sequentially in a first direction, each of the plurality of battery packs being provided with a plurality of battery cells arranged sequentially in a second direction; the above heat exchange plate, the heat exchange plate directly facing the plurality of battery packs; and an extension plate having an extension channel in communication with the water inlet and the water outlet.

With the battery assembly according to the embodiment of the present disclosure, the water outlet and the water inlet of the heat exchange plate can be extended by an extension plate, in such a manner that the water outlet and the water inlet of the heat exchange plate can extend beyond a frame of the battery assembly, which facilitates entry of the cooling liquid into the cooling flow channel for heat dissipation and simplifies mounting of the heat exchange plate at the battery assembly.

A vehicle according to an embodiment of the present disclosure includes the above battery assembly.

Since the vehicle according to the embodiment of the present disclosure is provided with the battery assembly according to the above embodiment, the vehicle exhibits high operational stability.

Additional aspects and advantages of the present disclosure will be provided at least in part in the following description, or will become apparent at least in part from the following description, or can be learned from practicing of the present disclosure.

After reading and understanding the accompanying drawings and the detailed description, other aspects can be understood.

### BRIEF DESCRIPTION OF THE DRAWINGS

FIG. 1 is a schematic view of a heat exchange plate according to some embodiments of the present disclosure.
FIG. 2 is a schematic view of a heat exchange plate body in FIG. 1.
FIG. 3 is a schematic view of a first heat exchange region in FIG. 2.
FIG. 4 is a schematic view of a second heat exchange region in FIG. 2.
FIG. 5 is a schematic view of a third heat exchange region in FIG. 2.
FIG. 6 is a schematic view of a fourth heat exchange region in FIG. 2.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

Various embodiments or examples for implementing different structures of the present disclosure are provided below. In order to simplify the description of the present disclosure, components and arrangements of specific examples are described herein. These specific examples are merely for the purpose of illustration, rather than limiting the present disclosure. Further, the same reference numerals and/or reference letters may appear in different examples of the present disclosure for the purpose of simplicity and clarity, instead of indicating a relationship between different embodiments and/or the discussed arrangements. In addition, the present disclosure provides examples of various specific processes and materials. However, applications of other processes and/or the use of other materials are conceivable for those of ordinary skill in the art.

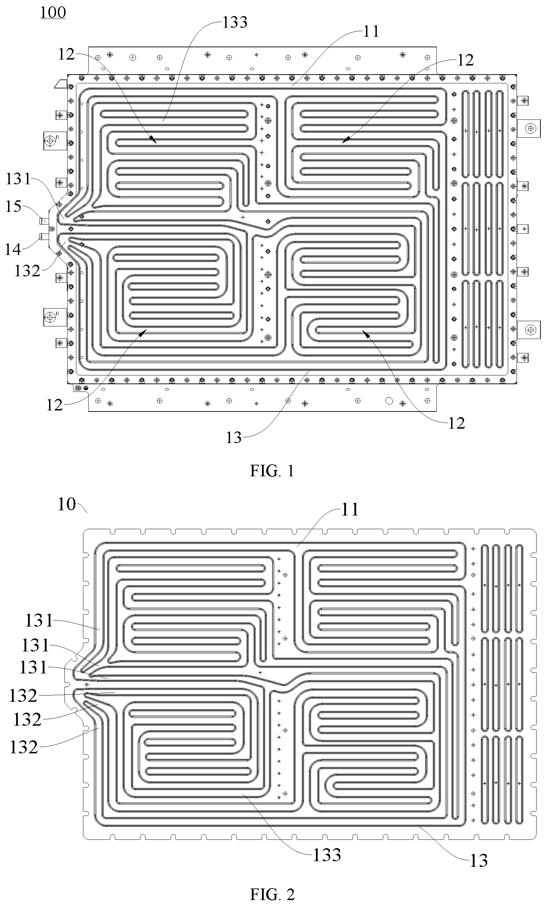

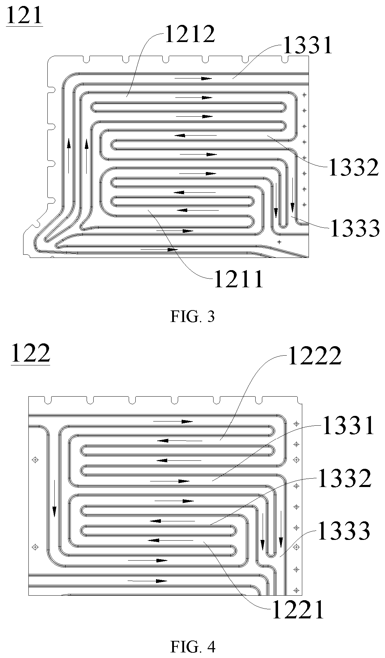

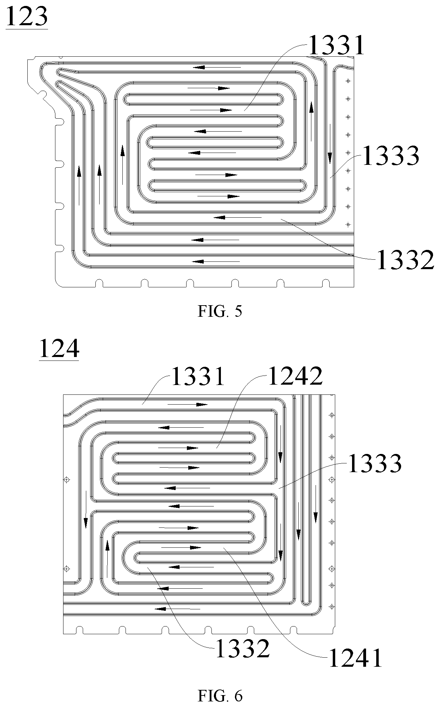

A heat exchange plate 100 according to an embodiment of the present disclosure is described below with reference to FIG. 1 to FIG. 6.

In an embodiment, a first direction may be defined as a length direction of a battery assembly, a second direction may be defined as a width direction of the battery assembly, and a third direction may be defined as a height direction of the battery assembly. Of course, in other embodiments, the first direction, the second direction, and the third direction may be defined as other directions of the battery assembly, which is not limited herein.

As illustrated in FIG. 1 to FIG. 6, the heat exchange plate 100 according to an embodiment of the present disclosure includes a heat exchange plate body 10 having a heat exchange surface 11 adapted to directly face a battery pack. A cooling flow channel 13, a water inlet 14, and a water outlet 15 are formed in the heat exchange plate body 10. The water inlet 14 and the water outlet 15 are in communication with the cooling flow channel 13. The cooling flow channel 13 includes a water inlet flow passage 131 in communication with the water inlet 14, a water outlet flow passage 132 in communication with the water outlet 15, and a plurality of branch flow passages 133. The water inlet flow passage 131 and/or the water outlet flow passage 132 are formed at an edge of the heat exchange plate body 10. The plurality of branch flow passages 133 are configured to be parallel to each other and arranged at intervals. Each of the plurality of branch flow passages 133 is connected to both the water inlet flow passage 131 and the water outlet flow passage 132 and directly faces the heat exchange surface 11 to be adapted for heat exchange with the battery pack.

In this way, the heat exchange plate 100 performs heat exchange with the battery pack through the heat exchange surface 11. Further, the plurality of branch flow passages 133 of the cooling flow channel 13 are arranged to directly face the heat exchange surface 11, improving a heat exchange efficiency. In addition, forming the water inlet flow passage 131 and/or the water outlet flow passage 132 at the edge of the heat exchange plate body 10 ensures that inflow and outflow of a cooling liquid do not affect heat exchange between the heat exchange surface 11 and the battery pack.

As an example, the heat exchange surface 11 formed in the heat exchange plate body 10 can exchange heat with the battery pack. In addition, the cooling flow channel 13 formed in the heat exchange plate body 10 includes the water inlet flow passage 131, the water outlet flow passage 132, and the branch flow passages 133. The cooling flow channel 13 is in communication with the water inlet 14 and the water outlet 15. In this way, the cooling liquid enters the cooling flow channel 13 through the water inlet 14 to exchange heat with the battery pack. Forming the water inlet flow passage 131 and the water outlet flow passage 132 at the edge of the heat exchange plate body 10 can facilitate connections between the branch flow passages 133 and each of the water inlet flow passage 131 and the water outlet flow passage 132. Further, providing the plurality of branch flow passages 133 arranged parallel to each other and at intervals enables the heat exchange plate 100 to achieve a higher heat exchange efficiency. Moreover, the branch flow passages 133 directly face the heat exchange surface 11, enabling effective heat exchange with the battery pack.

Further, the cooling flow channel 13 formed in the heat exchange plate body 10 is in communication with the water inlet 14 and the water outlet 15, such that the cooling liquid can enter the cooling flow channel 13 through the water inlet 14 and be discharged through the water outlet 15 after completing heat exchange. The cooling flow channel 13 includes the water inlet flow passage 131, the water outlet flow passage 132, and the branch flow passages 133, allowing the cooling liquid to flow in the cooling flow channel 13 to exchange heat with the battery pack.

The water inlet flow passage 131 is located at the edge of the heat exchange plate body 10, enabling the water inlet flow passage 131 to effectively distribute the cooling liquid into the branch flow passages 133. Alternatively, the water outlet flow passage 132 is located at the edge of the heat exchange plate body 10, enabling the cooling liquid in the branch flow passages 133 to converge into the water outlet flow passage 132 after completing heat exchange. Preferably, in an embodiment, both the water inlet flow passage 131 and the water outlet flow passage 132 are located at the edge of the heat exchange plate body 10, facilitating entry of the cooling liquid into the branch flow passages 133 during flowing of the cooling liquid within the cooling flow channel 13 and discharge of the cooling liquid from the branch flow passages 133 after heat exchange is completed. Additionally, the plurality of branch flow passages 133 are arranged parallel to each other and directly face the heat exchange plate 100, enabling the heat exchange plate 100 to effectively exchange heat with the battery pack.

In some embodiments, the heat exchange surface 11 has a plurality of heat exchange regions 12 arranged in an array, the plurality of branch flow passages 133 are formed in each of the plurality of heat exchange regions 12, and the water inlet flow passage 131 and/or the water outlet flow passage 132 is formed at an edge of the heat exchange region 12.

In this way, arranging the plurality of heat exchange regions 12 in an array at the heat exchange surface 11 enables the heat exchange surface 11 to achieve a higher heat exchange efficiency during heat exchange. Moreover, the plurality of heat exchange regions 12 allow a battery group in the battery pack to achieve better heat exchange when the heat exchange surface 11 exchanges heat with the battery pack. Forming the branch flow passages 133 in the heat exchange region 12 allows the heat exchange region 12 to perform heat exchange more effectively. Further, forming the water inlet flow passage 131 and/or the water outlet flow passage 132 at the edge of the heat exchange region 12 enables the cooling liquid that has completed heat exchange in the branch flow passages 133 to flow into the water inlet flow passage 131 and/or the water outlet flow passage 132.

When the heat exchange regions 12 are formed at the heat exchange surface 11, the heat exchange regions 12 are arranged in an array at the heat exchange surface 11. In addition, the battery pack contains a plurality of battery groups, in such a manner that the heat exchange regions 12 can correspond to the battery groups of the battery pack, respectively. In this way, each battery group can achieve effective heat exchange, improving a utilization rate of the heat exchange surface 11.

In some embodiments, in one of the plurality of heat exchange regions 12, the plurality of branch flow passages 133 each extend in a second direction and are arranged at intervals in a first direction, the cooling liquid in at least one of the plurality of branch flow passages 133 flows in a first flow direction, and the cooling liquid in at least another one of the plurality of branch flow passages 133 flows in a second flow direction. The first flow direction is opposite to the second flow direction.

In this way, the plurality of branch flow passages 133 extend in the second direction and are arranged at intervals in the first direction. It should be understood that, the cooling liquid enters from the water inlet 14 and sequentially flows through the water inlet flow passage 131, the branch flow passages 133, and the water outlet flow passage 132 before being discharged from the water outlet 15. In a flow process, the cooling liquid exchanges heat with the battery group. Consequently, as the cooling liquid flows, a thermal loss of the cooling liquid gradually increases, which reduces a heat exchange effect on battery cells. By enabling the cooling liquid in some branch flow passages 133 to flow in the first flow direction and the cooling liquid in other branch flow passages 133 to flow in the second flow direction opposite to the first flow direction, a phenomenon where some battery cells in the heat exchange region 12 experience satisfactory heat exchange while other battery cells in the heat exchange region 12 experience unsatisfactory heat exchange can be avoided. As a result, the heat exchange plate 100 achieves more balanced heat exchange among the plurality of battery cells in the heat exchange region 12.

In some embodiments, the plurality of branch flow passages 133 include a first branch flow passage 1331, a second branch flow passage 1332, and a plurality of third branch flow passages 1333. The first branch flow passage 1331 and the second branch flow passage 1332 are formed at two sides of each of the plurality of heat exchange regions 12 in the first direction, respectively. The plurality of third branch flow passages 1333 are configured to be in communication with each other. The plurality of third branch flow passages 133 are arranged between the first branch flow passage 1331 and the second branch flow passage 1332. The first branch flow passage 1331 and the second branch flow passage 1332 are in communication with each other through the plurality of third branch flow passages 1333. In at least one of the plurality of heat exchange regions 12, the first branch flow passage 1331 is in communication with the water inlet flow passage 131, and the second branch flow passage 1332 is in communication with the water outlet flow passage 132; and/or in at least one of the plurality of heat exchange regions 12, each of the first branch flow passage 1331 and the second branch flow passage 1332 is in communication with the water inlet flow passage 131, and at least one of the plurality of third branch flow passages 1333 is in communication with the water outlet flow passage 132.

In this way, in at least one of the plurality of heat exchange regions 12, each of the first branch flow passage 1331 and the second branch flow passage 1332 has an end in communication with the water inlet flow passage 131 and another end in communication with at least one third branch flow passage 1333. Among the plurality of third branch flow passages 1333, the third branch flow passage 1333 in communication with the first branch flow passage 1331 and the third branch flow passage 1333 in communication with the second branch flow passage 1332 are each in communication with the water outlet flow passage 132. Alternatively, one of the plurality of third branch flow passages 1333 has an end in communication with both the first branch flow passage 1331 and the second branch flow passage 1332 and another end in communication with the water outlet flow passage 132. The present disclosure is not limited in this regard.

It should be understood that, in one heat exchange region 12, a portion of the battery groups adjacent to an outer periphery of the heat exchange region 12 is configured as an edge portion. Since the edge portion has a large contact area with an ambient environment, when the heat exchange plate 100 heats the plurality of battery groups, a thermal loss at the edge portion is relatively high, resulting in a low heating efficiency of the heat exchange plate 100 for the battery groups. When the heat exchange plate 100 is adapted to heat the battery groups, the cooling liquid begins heating the plurality of battery groups corresponding to the heat exchange region 12 from the first branch flow passage 1331 and the second branch flow passage 1332. The first branch flow passage 1331 and the second branch flow passage 1332 each correspond to the edge portion. Since the thermal loss of the cooling liquid flowing within the first branch flow passage 1331 and the second branch flow passage 1332 is low, a heating effect of the first branch flow passage 1331 and the second branch flow passage 1332 on the edge portion is satisfactory. Therefore, with the above configuration, the heating effect on the edge portion can be improved to eliminate the thermal loss of the edge portion. In this way, more balanced heating of the battery groups corresponding to the heat exchange region 12 by the cooling liquid can be enabled, which enhances the heating effect on the battery groups corresponding to the heat exchange region 12, and improves a cold-start capability of the battery assembly.

In some embodiments, in at least one of the plurality of heat exchange regions 12, the first branch flow passage 1331 is in communication with the water inlet flow passage 131, and the second branch flow passage 1332 is in communication with the water outlet flow passage 132. Thus, after the cooling liquid enters the heat exchange region 12 from the water inlet flow passage 131, the cooling liquid sequentially passes through the first branch flow passage 1331, the third branch flow passage 1333, and the second branch flow passage 1332 before entering the water outlet flow passage 132. A flow path of the cooling liquid is simple, which simplifies an arrangement of the first branch flow passage 1331, the second branch flow passage 1332, and the third branch flow passage 1333 within the heat exchange region 12, improving a manufacturing efficiency of the heat exchange plate 100. In addition, a residence duration of the cooling liquid in the heat exchange region 12 is extended, enhancing a utilization rate of the cooling liquid.

It should be noted that a plurality of first branch flow passages 1331 may be formed and configured to be connected in parallel to each other. As an example, two first branch flow passages 1331 are formed. Ends of the two first branch flow passages 1331 that are at a same side are each in communication with an end of the third branch flow passage 1333, while another ends of the two first branch flow passages 1331 that are at a same side are each in communication with the water inlet flow passage 131. Similarly, a plurality of second branch flow passages 1332 may be formed and configured to be connected in parallel to each other. As an example, two second branch flow passage 1332 are formed. Ends of the two second branch flow passages 1332 that are at a same side are each in communication with an end of the third branch flow passage 1333, while another ends of the two second branch flow passages 1332 that are at a same side are each in communication with the water outlet flow passage 132.

In some embodiments, the heat exchange region 12 includes: a first heat exchange region 121 arranged adjacent to the water inlet 14, a flow rate of the cooling flow channel 13 in the first heat exchange region 121 being Q1; a second heat exchange region 122 arranged at a side of the first heat exchange region 121 facing away from the water inlet 14, a flow rate of the cooling flow channel 13 in the second heat exchange region 122 being Q2; a third heat exchange region 123 arranged adjacent to the water outlet 15, a flow rate of the cooling flow channel 13 in the third heat exchange region 123 being Q3; and a fourth heat exchange region 124 arranged at a side of the third heat exchange region 123 facing away from the water outlet 15, a flow rate of the cooling flow channel 13 in the fourth heat exchange region 124 being Q4, where Q1<Q2 and Q3<Q4.

In this way, the heat exchange plate 100 according to the embodiment has the water inlet 14, the water outlet 15, and the plurality of heat exchange regions 12. The water inlet 14 is in communication with the plurality of heat exchange regions 12 through the water inlet flow passage 131. The water outlet 15 is in communication with the plurality of heat exchange regions 12 through the water outlet flow passage 132. When the battery pack is in operation, the cooling liquid can enter the heat exchange plate 100 through the water inlet 14 and flow along a water inflow passage into the corresponding heat exchange region 12 to exchange heat with the battery pack. After heat exchange, the cooling liquid can flow through the water outlet flow passage 132 towards the water outlet 15 and exit the heat exchange plate 100, realizing a heat exchange function of the heat exchange plate 100. Specifically, the heat exchange regions 12 at the heat exchange plate 100 include the first heat exchange region 121, the second heat exchange region 122, the third heat exchange region 123, and the fourth heat exchange region 124. The first heat exchange region 121 is arranged adjacent to the water inlet 14. The second heat exchange region 122 is arranged at the side of the first heat exchange region 121 facing away from the water inlet 14. The third heat exchange region 123 is arranged adjacent to the water outlet 15. The fourth heat exchange region 124 is arranged at the side of the third heat exchange region 123 facing away from the water outlet 15. Providing the four heat exchange regions 12 at the heat exchange plate 100 enables simultaneous heat exchange with the plurality of battery groups of the battery pack, improving the heat exchange efficiency of the heat exchange plate 100. Further, a positional arrangement of the four heat exchange regions 12 allows for a compact layout of an overall structure of the heat exchange plate 100.

In addition, the flow rate of the cooling flow channel 13 in the first heat exchange region 121 is Q1, the flow rate of the cooling flow channel 13 in the second heat exchange region 122 is Q2, the flow rate of the cooling flow channel 13 in the third heat exchange region 123 is Q3, and the flow rate of the cooling flow channel 13 in the fourth heat exchange region 124 is Q4, where Q1<Q2 and Q3<Q4. That is, the flow rate of the cooling flow channel 13 in the first heat exchange region 121 is smaller than that of the cooling flow channel 13 in the second heat exchange region 122, and the flow rate of the cooling flow channel 13 in the third heat exchange region 123 is smaller than that of the cooling flow channel 13 in the fourth heat exchange region 124. Setting the flow rates of the cooling flow channels 13 in the four heat exchange regions 12 of the heat exchange plate 100 in this manner facilitates a uniform heat exchange efficiency for each heat exchange region 12. Specifically, after the cooling liquid flows into the heat exchange plate 100, due to a positional layout of the four heat exchange regions 12, a path for the cooling liquid to enter the first heat exchange region 121 is shorter than a path for the cooling liquid to enter the second heat exchange region 122. Therefore, setting the flow rate of the cooling flow channel 13 in the second heat exchange region 122 to be greater than that of the cooling flow channel 13 in the first heat exchange region 121 can avoid a loss of the cooling liquid during flowing of the cooling liquid into the second heat exchange region 122 and increase a speed at which the cooling liquid flows into the second heat exchange region 122, achieving a balanced heat exchange efficiency between the first heat exchange region 121 and the second heat exchange region 122 during heat exchange. Similarly, a path for the cooling liquid to enter the third heat exchange region 123 is shorter than a path for the cooling liquid to enter the fourth heat exchange region 124. Therefore, setting the flow rate of the cooling flow channel 13 in the fourth heat exchange region 124 to be greater than that of the cooling flow channel 13 in the third heat exchange region 123 can avoid a loss of the cooling liquid during flowing of the cooling liquid into the fourth heat exchange region 124 and increase a speed at which the cooling liquid flows into the fourth heat exchange region 124, achieving a balanced heat exchange efficiency between the third heat exchange region 123 and the fourth heat exchange region 124 during heat exchange. The configuration of Q1<Q2 and Q3<Q4 can improve balance of the heat exchange efficiency across all the heat exchange regions 12 of the heat exchange plate 100, preventing a localized part of the heat exchange plate 100 from exhibiting an excessively strong or weak heat exchange capability. Therefore, an overall heat exchange efficiency of the heat exchange plate 100 and safety of the heat exchange plate 100 during heat exchange can be improved.

It should be noted that the above loss of the cooling liquid can be understood as at least part of the cooling liquid adhering to a pipeline transporting the cooling liquid when the cooling liquid flows towards the second heat exchange region 122 or the fourth heat exchange region 124.

In some embodiments, Q1 and Q3 may be identical or relatively close, which can be specifically defined based on actual manufacturing dimensions of the heat exchange plate 100.

In some embodiments, the first heat exchange region 121 includes a first sub-region 1211 and a second sub-region 1212 that are connected in parallel and spaced apart from each other in a first direction. A flow rate of the cooling flow channel 13 in the first sub-region 1211 is Q11, and a flow rate of the cooling flow channel 13 in the second sub-region 1212 is Q12, where 0≤|Q11-Q12|≤1.5%.

Specifically, the first heat exchange region 121 includes the first sub-region 1211 and the second sub-region 1212. The first sub-region 1211 and the second sub-region 1212 can exchange heat with different battery groups in the battery pack, improving a heat exchange capability of the heat exchange plate 100. By spacing the first sub-region 1211 apart from the second sub-region 1212 in the first direction, the first heat exchange region 121 can have a compact structure. Further, the flow rate of the cooling flow channel 13 in the first sub-region 1211 is Q11, and the flow rate of the cooling flow channel 13 in the second sub-region 1212 is Q12, where 0≤|Q11-Q12|≤1.5%. That is, a difference between the flow rate of the cooling flow channel 13 in the first sub-region 1211 and the flow rate of the cooling flow channel 13 in the second sub-region 1212 is controlled to range from 0 to 1.5%. Such a relationship between Q11 and Q12 enables heat exchange capabilities of the first sub-region 1211 and the second sub-region 1212 to be balanced, preventing a localized part of the first heat exchange region 121 from exhibiting an excessively strong heat exchange capability.

In some embodiments, the first sub-region 1211 is in communication with the water inlet 14 at a side of the first sub-region 1211 facing away from the second sub-region 1212, and the second sub-region 1212 is in communication with the water inlet 14 at a side of the second sub-region 1212 facing away from the first sub-region 1211; and the first sub-region 1211 is in communication with the water outlet 15 at a side of the first sub-region 1211 adjacent to the second sub-region 1212, and the second sub-region 1212 is in communication with the water outlet 15 at a side of the second sub-region 1212 adjacent to the first sub-region 1211.

Specifically, a communication pipeline between the first sub-region 1211 and the water inlet 14 and a communication pipeline between the second sub-region 1212 and the water inlet 14 are arranged at sides of the first sub-region 1211 and the second sub-region 1212 that face away from each other, respectively; a communication pipeline between the first sub-region 1211 and the water outlet 15 and a communication pipeline between the second sub-region 1212 and the water outlet 15 are arranged at sides of the first sub-region 1211 and the second sub-region 1212 that are close to each other, respectively. Such a communication scheme of each of the first sub-region 1211 and the second sub-region 1212 with each of the water inlet 14 and the water outlet 15 results in a configuration of "inflowing from two sides, outflowing from a middle" between the cooling liquid and the first heat exchange region 121. Here, the configuration of "inflowing from two sides, outflowing from a middle" means that the cooling liquid enters the first sub-region 1211 and the second sub-region 1212 from two side surfaces of the first sub-region 1211 and the second sub-region 1212 that face away from each other, respectively, and flows out from the sides of the first sub-region 1211 and the second sub-region 1212 that are close to each other, respectively. The arrangement of inlet and outlet paths of the cooling liquid for the first sub-region 1211 and the second sub-region 1212 causes the cooling liquid in the first heat exchange region 121 to flow from a periphery towards a middle. During an operation of the battery pack, a temperature at an edge of the battery pack changes rapidly. Therefore, the cooling liquid flowing from the periphery towards the middle of the first heat exchange region 121 can enhance a heat exchange capability between the first heat exchange region 121 and the corresponding battery group, allowing the battery group to maintain an appropriate temperature and improving a cold-start capability of the battery group.

In some embodiments, the second heat exchange region 122 includes a third sub-region 1221 and a fourth sub-region 1222 that are connected in parallel and spaced apart from each other in the first direction, and the fourth heat exchange region 124 includes a fifth sub-region 1241 and a sixth sub-region 1242 that are connected in parallel and spaced apart from each other in the first direction. The third sub-region 1221 and the sixth sub-region 1242 are adjacent to each other. A flow rate of the cooling flow channel 13 in the third sub-region 1221 is Q21, and a flow rate of the cooling flow channel 13 in the fourth sub-region 1222 is Q22, where Q21<Q22. A flow rate of the cooling flow channel 13 in the fifth sub-region 1241 is Q41, and a flow rate of the cooling flow channel 13 in the sixth sub-region 1242 is Q42, where Q41>Q42.

Similar to the above first heat exchange region 121, the second heat exchange region 122 and the fourth heat exchange region 124 may also be configured with a plurality of sub-regions. Specifically, the second heat exchange region 122 may include the third sub-region 1221 and the fourth sub-region 1222, and the fourth heat exchange region 124 may include the fifth sub-region 1241 and the sixth sub-region 1242. The third sub-region 1221 and the fourth sub-region 1222 are spaced apart from each other in the first direction, the fifth sub-region 1241 and the sixth sub-region 1242 are also spaced apart from each other in the first direction, and the third sub-region 1221 and the sixth sub-region 1242 are adjacent to each other, which can be understood as that the fifth sub-region 1241, the sixth sub-region 1242, the third sub-region 1221, and the fourth sub-region 1222 are sequentially arranged at intervals in the first direction of the heat exchange plate 100. By configuring two sub-regions in each of the second heat exchange region 122 and the fourth heat exchange region 124, both the second heat exchange region 122 and the fourth heat exchange region 124 can exchange heat with the plurality of battery groups in the battery pack, improving the heat exchange capability of the heat exchange plate 100. In addition, a layout of the fifth sub-region 1241, the sixth sub-region 1242, the third sub-region 1221, and the fourth sub-region 1222 at the heat exchange plate 100 improves structural compactness of the second heat exchange region 122 and the fourth heat exchange region 124.

Further, in the second heat exchange region 122, the flow rate of the cooling flow channel 13 in the third sub-region 1221 is Q21, and the flow rate of the cooling flow channel 13 in the fourth sub-region 1222 is Q22, where Q21<Q22. That is, a cooling liquid flow rate in the third sub-region 1221 is smaller than that in the fourth sub-region 1222. Since the fourth sub-region 1222 is arranged at a part of the second heat exchange region 122 that is close to the edge of the heat exchange plate 100, and the part corresponds to the edge of the battery pack where a temperature of the battery group changes rapidly, a cooling liquid flow rate in the fourth sub-region 1222 being greater than that in the third sub-region 1221 can improve a heat exchange capability of the fourth sub-region 1222 for the battery group, which ensures that the battery group corresponding to the fourth sub-region 1222 can undergo timely heat exchange, improving safety of the battery group. Similarly, in the fourth heat exchange region 124, the flow rate of the cooling flow channel 13 in the fifth sub-region 1241 is Q41, and the flow rate of the cooling flow channel 13 in the sixth sub-region 1242 is Q42, where Q41>Q42. Since the fifth sub-region 1241 is arranged at a part of the fourth heat exchange region 124 that is close to the edge of the heat exchange plate 100, and the part corresponds to the edge of the battery pack where the temperature of the battery group changes rapidly, a cooling liquid flow rate in the fifth sub-region 1241 being greater than that in the sixth sub-region 1242 can improve a heat exchange capability of the fifth sub-region 1241 for the battery group, which ensures that the battery group corresponding to the fifth sub-region 1241 can undergo timely heat exchange, improving the safety of the battery group.

In some embodiments, the third heat exchange region 123 may also be configured with a plurality of sub-regions. A specific configuration scheme can be set based on actual requirements of the battery pack during assembly.

In this way, a plurality of branch flow passages 133 that are parallel to each other are formed in each of the first heat exchange region 121, the second heat exchange region 122, the third heat exchange region 123, and the fourth heat exchange region 124. The cooling liquid in at least one branch flow passage 133 flows in the first flow direction. The cooling liquid in at least another branch flow passage 133 flows in the second flow direction. The first flow direction is opposite to the second flow direction. Heat exchange of the heat exchange plate 100 is achieved through flowing of the cooling liquid in each heat exchange region 12. Therefore, a configuration of the heat exchange region 12 affects the heat exchange capability of the heat exchange plate 100. Specifically, the plurality of branch flow passages 133 that are parallel to each other being formed in each of the first heat exchange region 121, the second heat exchange region 122, the third heat exchange region 123, and the fourth heat exchange region 124 can be understood as that the cooling liquid flows within the plurality of branch flow passages 133 after entering each heat exchange region. The configuration of the plurality of branch flow passages 133 increases a heat exchange area between each heat exchange region 12 and the battery pack, improving the heat exchange capability of the heat exchange plate 100. In any heat exchange region 12, the cooling liquid in at least one branch flow passage 133 flows in the first flow direction, and the cooling liquid in at least another branch flow passage 133 flows in the second flow direction opposite to the first flow direction, which can be understood as that: in the plurality of branch flow passages 133 that are parallel to each other, branch flow passages 133 in which the cooling liquid flows in opposite directions are available. Such a flow direction arrangement of the cooling liquid in the branch flow passages 133 enables the cooling liquid in a single heat exchange region 12 to reciprocate in the first flow direction and the second flow direction, which extends the residence duration of the cooling liquid in each heat exchange region 12, further improving a heat exchange capability of each heat exchange region 12.

In some embodiments, a flow resistance of the branch flow passage 133 in the first heat exchange region 121 is R1, a flow resistance of the branch flow passage 133 in the second heat exchange region 122 is R2, a flow resistance of the branch flow passage 133 in the third heat exchange region 123 is R3, and a flow resistance of the branch flow passage 133 in the fourth heat exchange region 124 is R4, where R1>R2 and R3>R4.

In some embodiments, the flow rates of the cooling liquid in the first heat exchange region 121, the second heat exchange region 122, the third heat exchange region 123, and the fourth heat exchange region 124 are Q1, Q2, Q3, and Q4, respectively. As the flow resistance of the branch flow passage 133 increases, a flow velocity of the cooling liquid in the branch flow passage 133 increases, i.e., the residence duration of the cooling liquid in the branch flow passage 133 decreases, and thus the flow rate in the branch flow passage 133 decreases. As the cooling liquid flows, the thermal loss of the cooling liquid gradually increases. It should be understood that, a time point when the cooling liquid enters the first heat exchange region 121 is t1, a time point when the cooling liquid enters the second heat exchange region 122 is t2, a time point when the cooling liquid enters the third heat exchange region 123 is t3, and a time point when the cooling liquid enters the fourth heat exchange region 124 is t4. Through a comparison between the second heat exchange region 122 and the third heat exchange region 123, a distance between the water inlet 1410 and the third heat exchange region 123 is smaller than a distance between the water inlet 1410 and the second heat exchange region 122. Therefore, t3>t2. Through a comparison between the second heat exchange region 122 and the fourth heat exchange region 124, the distance between the water inlet 1410 and the second heat exchange region 122 is equal to a distance between the water inlet 1410 and the fourth heat exchange region 124, i.e., t2 = t4. However, since the third heat exchange region 123 and the fourth heat exchange region 124 share the third water inlet 1410, an efficiency of the cooling liquid entering the second heat exchange region 122 is greater than an efficiency of the cooling liquid entering the fourth heat exchange region 124. Consequently, with the above arrangement, Q4>Q2>Q3>Q1 can be achieved, which achieves more balanced heat exchange between the cooling liquid and the battery groups corresponding to the first heat exchange region 121, the second heat exchange region 122, the third heat exchange region 123, and the fourth heat exchange region 124.

In some embodiments, a cross-sectional area of the branch flow passage in the first heat exchange region 121 is S1, a cross-sectional area of the branch flow passage 133 in the second heat exchange region 122 is S2, a cross-sectional area of the branch flow passage 133 in the third heat exchange region 123 is S3, and a cross-sectional area of the branch flow passage 133 in the fourth heat exchange region 124 is S4, where S3>S4 and S2>S1.

It should be understood that the flow resistance of the cooling liquid in the branch flow passage 133 may be controlled through disposing a block or the like in the branch flow passage 133, or alternatively, the flow resistance of the cooling liquid in the branch flow passage 133 may also be controlled through controlling the cross-sectional area of the branch flow passage 133. The present disclosure is not limited in this regard. Thus, by setting S4>S2>S3>S1, R1>R3>R2>R4 can be achieved, realizing Q4>Q2>Q3>Q1.

In some embodiments, the heat exchange plate 100 includes a first heat exchange plate 100 and a second heat exchange plate 100. At least one of the first heat exchange plate 100 and the second heat exchange plate 100 has the cooling flow channel 13. That is, the cooling flow channel 13 may be formed at the first heat exchange plate 100, or the second heat exchange plate 100, or both the first heat exchange plate 100 and the second heat exchange plate 100. Preferably, in an embodiment, the cooling flow channel 13 is formed at the first heat exchange plate 100, while the second heat exchange plate 100 is a flat plate, which facilitates heat exchange between the heat exchange plate 100 and the battery pack.

Further, both the first heat exchange plate 100 and the second heat exchange plate 100 are constructed as sheet metal parts, such that when the first heat exchange plate 100 and the second heat exchange plate 100 are joined together, the heat exchange plate 100 can be formed. Additionally, the first heat exchange plate 100 and the second heat exchange plate 100 may be positioned using spot welding. After positioning is completed, the first heat exchange plate 100 and the second heat exchange plate 100 are connected through brazing. In this way, connection stability between the first heat exchange plate 100 and the second heat exchange plate 100 can be ensured, and the heat exchange plate 100 is less likely to experience a leakage.

The present disclosure further provides a battery assembly.

The battery assembly according to an embodiment of the present disclosure includes: a plurality of battery packs configured to be arranged sequentially in a first direction, each of the plurality of battery packs being provided with a plurality of battery cells arranged sequentially in a second direction; the heat exchange plate 100 according to any of the above embodiments, the heat exchange plate 100 directly facing the battery pack; and an extension plate having an extension channel in communication with the water inlet 14 and the water outlet 15.

In this way, the water outlet 15 and the water inlet 14 of the heat exchange plate 100 can be extended by an extension plate, in such a manner that the water outlet 15 and the water inlet 14 of the heat exchange plate 100 can extend beyond a frame of the battery assembly, which facilitates entry of the cooling liquid into the cooling flow channel 13 for heat dissipation and simplifies mounting of the heat exchange plate 100 at the battery assembly.

The present disclosure further provides a vehicle.

The vehicle according to an embodiment of the present disclosure includes the battery assembly according to any of the above embodiments.

Since the vehicle of the present disclosure is provided with the battery assembly according to any of the above embodiments, the vehicle exhibits high operational stability.

It should be understood that, in the description of the present disclosure, the orientation or the position indicated by terms such as "center", "longitudinal", "transverse", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation or the position as shown in the drawings, and is only for the convenience of describing the embodiments of the present disclosure and simplifying the description, rather than indicating or implying that the pointed device or element must have a specific orientation, or be constructed and operated in a specific orientation, and therefore cannot be understood as a limitation of the present disclosure.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features or more of the features. In the description of the present disclosure, "plurality" means at least two, unless otherwise specifically defined.

In the present disclosure, unless otherwise clearly specified and limited, terms such as "install", "connect", "connect to", and "fix" should be understood in a broad sense. For example, it may be a fixed connection or a detachable connection or connection as one piece; mechanical connection or electrical connection or communication; direct connection or indirect connection through an intermediate; internal communication of two components or the interaction relationship between two components. For those of ordinary skill in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A heat exchange plate, comprising:
a heat exchange plate body having a heat exchange surface adapted to directly face a battery pack, wherein a cooling flow channel, a water inlet, and a water outlet are formed in the heat exchange plate body, the water inlet and the water outlet being in communication with the cooling flow channel, wherein:
the cooling flow channel comprises:
a water inlet flow passage in communication with the water inlet;
a water outlet flow passage in communication with the water outlet, the water inlet flow passage and/or the water outlet flow passage being formed at an edge of the heat exchange plate body; and
a plurality of branch flow passages configured to be parallel to each other and arranged at intervals, wherein each of the plurality of branch flow passages is connected to both the water inlet flow passage and the water outlet flow passage and directly faces the heat exchange surface to be adapted for heat exchange with the battery pack.

2. The heat exchange plate according to claim 1, wherein the heat exchange surface has a plurality of heat exchange regions arranged in an array, wherein:
the plurality of branch flow passages are formed in each of the plurality of heat exchange regions; and
the water inlet flow passage and/or the water outlet flow passage is formed at an edge of the plurality of heat exchange regions.

3. The heat exchange plate according to claim 2, wherein in one of the plurality of heat exchange regions, the plurality of branch flow passages each extend in a second direction and are arranged at intervals in a first direction, a cooling liquid in at least one of the plurality of branch flow passages flows in a first flow direction, and a cooling liquid in at least another one of the plurality of branch flow passages flows in a second flow direction opposite to the first flow direction.

4. The heat exchange plate according to claim 2 or 3, wherein the plurality of branch flow passages comprise:
a first branch flow passage and a second branch flow passage that are formed at two sides of each of the plurality of heat exchange regions in a first direction, respectively; and
a plurality of third branch flow passages configured to be in communication with each other, wherein the plurality of branch flow passages are arranged between the first branch flow passage and the second branch flow passage, and wherein the first branch flow passage and the second branch flow passage are in communication with each other through the plurality of third branch flow passages, wherein:
in at least one of the plurality of heat exchange regions, the first branch flow passage is in communication with the water inlet flow passage, and the second branch flow passage is in communication with the water outlet flow passage; and/or
in at least one of the plurality of heat exchange regions, each of the first branch flow passage and the second branch flow passage is in communication with the water inlet flow passage, and at least one of the plurality of third branch flow passages is in communication with the water outlet flow passage.

5. The heat exchange plate according to any one of claims 2 to 4, wherein the plurality of heat exchange regions comprises:
a first heat exchange region arranged adjacent to the water inlet, a flow rate of the cooling flow channel in the first heat exchange region being Q1;
a second heat exchange region arranged at a side of the first heat exchange region facing away from the water inlet, a flow rate of the cooling flow channel in the second heat exchange region being Q2;
a third heat exchange region arranged adjacent to the water outlet, a flow rate of the cooling flow channel in the third heat exchange region being Q3; and
a fourth heat exchange region arranged at a side of the third heat exchange region facing away from the water outlet, a flow rate of the cooling flow channel in the fourth heat exchange region being Q4, where Q1<Q2, and Q3<Q4.

6. The heat exchange plate according to claim 5, wherein the first heat exchange region comprises a first sub-region and a second sub-region that are connected in parallel and spaced apart from each other in a first direction, wherein:
a flow rate of the cooling flow channel in the first sub-region is Q11; and
a flow rate of the cooling flow channel in the second sub-region is Q12, where 0≤|Q11-Q12|≤1.5.

7. The heat exchange plate according to claim 6, wherein:
the first sub-region is in communication with the water inlet at a side of the first sub-region facing away from the second sub-region, and the second sub-region is in communication with the water inlet at a side of the second sub-region facing away from the first sub-region; and
the first sub-region is in communication with the water outlet at a side of the first sub-region adjacent to the second sub-region, and the second sub-region is in communication with the water outlet at a side of the second sub-region adjacent to the first sub-region.

8. The heat exchange plate according to claim 6 or 7, wherein:
the second heat exchange region comprises a third sub-region and a fourth sub-region that are connected in parallel and spaced apart from each other in the first direction; and
the fourth heat exchange region comprises a fifth sub-region and a sixth sub-region that are connected in parallel and spaced apart from each other in the first direction, the third sub-region and the sixth sub-region being adjacent to each other, wherein:
a flow rate of the cooling flow channel in the third sub-region is Q21, and a flow rate of the cooling flow channel in the fourth sub-region is Q22, where Q21<Q22; and
a flow rate of the cooling flow channel in the fifth sub-region is Q41, and a flow rate of the cooling flow channel in the sixth sub-region is Q42, where Q41>Q42.

9. The heat exchange plate according to any one of claims 5 to 8, wherein:
a flow resistance of the plurality of branch flow passages in the first heat exchange region is R1;
a flow resistance of the plurality of branch flow passages in the second heat exchange region is R2;
a flow resistance of the plurality of branch flow passages in the third heat exchange region is R3; and
a flow resistance of the plurality of branch flow passages in the fourth heat exchange region is R4, where R1>R2, and R3>R4.

10. The heat exchange plate according to claim 9, wherein:
a cross-sectional area of the plurality of branch flow passages in the first heat exchange region is S1;
a cross-sectional area of the plurality of branch flow passages in the second heat exchange region is S2;
a cross-sectional area of the plurality of branch flow passages in the third heat exchange region is S3; and
a cross-sectional area of the plurality of branch flow passages in the fourth heat exchange region is S4, where S3>S4, and S2>S1.

11. A battery assembly, comprising:
a plurality of battery packs configured to be arranged sequentially in a first direction, each of the plurality of battery packs being provided with a plurality of battery cells arranged sequentially in a second direction;
the heat exchange plate according to any one of claims 1 to 10, the heat exchange plate directly facing the plurality of battery packs; and
an extension plate having an extension channel in communication with the water inlet and the water outlet.

12. A vehicle, comprising the battery assembly according to claim 11.
